# EUROPÄISCHE PATENTSCHRIFT

(11) **EP 3 234 399 B1**
(45) Veröffentlichungstag und Bekanntmachung des Hinweises auf die Patenterteilung: **20.02.2019**
(21) Anmeldenummer: 15808401.2
(22) Anmeldetag: 14.12.2015
(51) Int. Cl.: F16D 51/22, F16D 65/22, F16D 65/56, F16D 121/24, F16D 125/36

(54) **ELEKTROMECHANISCH BETÄTIGBARE SPREIZEINRICHTUNG FÜR EINE MIT EINER NACHSTELLEINRICHTUNG VERSEHENEN TROMMELBREMSE**
ELECTROMECHANICALLY ACTUABLE EXPANDING DEVICE FOR A DRUM BRAKE PROVIDED WITH A READJUSTMENT DEVICE
DISPOSITIF D'ÉCARTEMENT À ACTIONNEMENT ÉLECTROMÉCANIQUE POUR UN FREIN À TAMBOUR MUNI D'UN DISPOSITIF DE RATTRAPAGE DE JEU

(30) Priorität: 17.12.2014 DE 102014226268
(43) Veröffentlichungstag der Anmeldung: 25.10.2017
(73) Patentinhaber: Continental Teves AG & Co. OHG, 60488 Frankfurt am Main (DE)
(72) Erfinder: BACH, Uwe, 65527 Niedernhausen (DE); HOFFMANN, Jens, 64285 Darmstadt (DE); GÄDKE, Martin, 65719 Hofheim/Ts. (DE); VON HAYN, Holger, 61118 Bad Vilbel (DE); SEFO, Ahmed, 65931 Frankfurt (DE); LAHR, Thorsten, 65203 Wiesdaden (DE); RITTER, Wolfgang, 61440 Oberursel/Ts. (DE)
(86) Internationale Anmeldenummer: PCT/EP2015/079519
(87) Internationale Veröffentlichungsnummer: WO 2016/096680

(56) Entgegenhaltungen:
- FR-A1- 2 869 661
- US-A- 1 846 161

## Beschreibung

Die Erfindung bezieht sich auf eine elektromechanisch betätigbare Spreizeinrichtung für eine mit einer Nachstelleinrichtung versehenen Trommelbremse.

Bekannt sind hydraulische Spreizeinrichtungen, die einen Radbremszylinder aufweisen, der über eine hydraulische Leitung mit einem Bremsdruckheber, z. B. einem pedalbetätigten Hauptbremszylinder, verbunden ist.

Insbesondere für Elektrofahrzeuge sind schon elektromechanische Spreizeinrichtungen vorgeschlagen worden, wie z. B. ein von einem Elektromotor angetriebener Nocken, der sich an Stelle des Radbremszylinders befindet.

Zur Betätigung von Scheibenbremsen sind auch schon Rollrampen vorgesehen worden, bei denen zwischen zwei Körpern Kugeln auf rampenförmigen Kugelbahnen vorgesehen sind. Durch die Verdrehung des einen Körpers laufen die Kugeln die Rampen hoch und drücken dabei die beiden Körper auseinander, was zur Betätigung der Bremse führt.

Bei Spreizeinrichtungen für Trommelbremsen besteht insbesondere das Problem, dass diese mit einer Nachstelleinrichtung versehen sind, die dafür sorgt, dass das Lüftspiel zwischen den Bremsbacken und der Bremstrommel einer Trommelbremse schrittweise nachgestellt wird.

Der Hub, der eine Spreizeinrichtung der oben beschriebenen Art zur Verfügung stellen kann, reicht nicht aus, einen ausreichend großen Verstellweg zum Nachstellen der Trommelbremse zu realisieren, so dass derartige Spreizeinrichtungen bisher noch nicht für Trommelbremsen eingesetzt worden sind.

Dokument FR 2 869 661 A1 offenbart eine Spreizeinrichtung gemäß dem Oberbegriff des Anspruchs 1.

Die Erfindung beruht auf der Aufgabe, eine Spreizeinrichtung für eine mit einer Nachstelleinrichtung versehenen Trommelbremse zu schaffen.

Zur Lösung des Problems sieht die Erfindung vor, dass die Spreizeinrichtung einen um eine Drehachse drehbaren Drehkörper mit einer senkrecht zur Drehachse verlaufenden Stirnseite und einen gegen eine Verdrehung um die besagte Drehachse gesicherten Übertragungskörper mit einer der Stirnseite gegenüberliegenden Druckseite aufweist, wobei zwischen der Stirnseite und der Druckseite auf einem koaxial zur besagten Drehachse verlaufenden Kreis wenigstens drei Kugeln angeordnet sind, die in Kugelbahnen an der Stirnseite und der Druckseite verlaufen, und wobei wenigstens jeweils die Kugelbahnen einer Seite als Rampe ausgeführt sind, und dass der Drehkörper aus zwei in axialer Richtung gegeneinander verschiebbaren Teilkörpern besteht, die von einem lageveränderlichen Distanzkörper auf Abstand gehalten sind. Wenn die Bremsbeläge um ein gewisses Maß verbraucht sind, bewirkt die Nachstelleinrichtung der Trommelbremse, dass die Bremsbacken nicht wieder auf ihre Bremsausgangsposition zurückgestellt werden, sondern nur so weit, dass das konstruktiv vorgesehene Ursprungslüftspiel zwischen den Bremsbacken und der Bremstrommel wieder hergestellt ist. Daher darf der Übertragungskörper ebenfalls nicht vollständig zurückgestellt werden, damit er in Anlage an das Kopfende einer Bremsbacke verbleibt. Die Erfindung bewirkt, dass der Distanzkörper den Übertragungskörper an das Kopfende der Bremsbacke anliegend hält, wobei die Kugeln sich wieder in ihren Ausgangspositionen auf den Kugelbahnen befinden, so dass bei einer erneuten Bremsbetätigung wieder der volle Betätigungsweg der Spreizeinrichtung zur Verfügung steht.

Um dies zu unterstützen, sind die Teilkörper von einer zwischen ihnen angeordneten Spreizfeder in Richtung auf einen größeren Abstand belastet. Die Spreizfeder bewirkt somit, dass die Spreizeinrichtung stets in Anlage an die Kopfenden der Bremsbacken liegt. Der Distanzkörper verhindert, dass die Teilkörper hinter einen einmal erreichten Abstand zurückfallen.

Entsprechend der Nachstellung der Trommelbremse muss der Distanzkörper sich quasi verlängern. Dazu ist vorgesehen, dass der Distanzkörper ein Gewinde aufweist, das in ein Gegengewinde am ersten Teilkörper eingreift, wobei die Gewindeverbindung ein selbsthemmender Sperrtrieb ist, und dass der Distanzkörper an einer Stützfläche des zweiten Teilkörpers anliegt, die dem ersten Teilkörper gegenüber liegt.

Dies erlaubt es, den Distanzkörper an eine nach einer Nachstellung sich neu einstellten Grundposition der Bremsbacken anzupassen. Wenn sich nämlich die beiden Teilkörper aufgrund einer Nachstellung voneinander entfernt haben, wird der Distanzkörper auf dem Gegengewinde am ersten Teilkörper gedreht und gelangt somit wieder zur Anlage an den ersten Teilkörper. Dadurch ist eine neue Minimaldistanz zwischen den beiden Teilkörpern definiert.

Damit die angesprochene Drehung auftritt, ist vorgesehen, dass der Distanzkörper eine Nachstellmutter aufweist, die an einer Reibfläche des zweiten Teilkörpers, welcher der Stützfläche gegenüberliegt, anliegt, und dass eine Gewindeverbindung zwischen der Nachstellmutter und dem Distanzkörper als nicht selbsthemmender Lauftrieb ausgebildet ist.

Wenn die beiden Teilkörper durch die Spreizfeder auseinander gedrückt werden, liegt die Nachstellmutter zunächst an der Reibfläche an, so dass die Gewindeverbindung zwischen dem Distanzkörper und dem ersten Teilkörper wie eine Spindel wirkt und dafür sorgt, dass der Distanzkörper sich auf dem Gegengewinde dreht und den entstandenen Spalt zwischen dem Distanzkörper und der Stützfläche zum Teil ausgleicht.

Bei den folgenden Bremsungen wird dieser Vorgang wiederholt, bis der Spalt vollständig geschlossen ist und der Distanzkörper so weit gegenüber dem ersten Teilkörper versetzt ist, dass die Nachstellung des Lüftspiels vollständig ausgeglichen ist.

Dabei besteht der Distanzkörper aus einer Hülse mit einem Innengewinde, das auf einem das Gegengewinde bildenden Außengewinde an einen Zapfen am ersten Teilkörper aufgeschraubt ist.

Weiterhin sieht die Erfindung vor, dass die Hülse einen sich in axialer Richtung erstreckenden Schaft aufweist, der ein Außengewinde für die Nachstellmutter aufweist, wobei der Schaft durch eine Trennwand des zweiten Teilkörpers hindurchragt und die Nachstellmutter an der von dem ersten Teilkörper wegweisenden Rückwand der Trennwand anliegt.

Damit die Reibkräfte zwischen der Nachstellmutter und der zweiten Abstützfläche verstärkt werden, ist vorgesehen, dass die Rückwand eine konusförmige Vertiefung für die Nachstellmutter aufweist. Diese legt sich daher mit einer Kante an die konusförmige Fläche der Vertiefung an.

Damit die Nachstellmutter wieder zur Anlage an die Reibfläche gebracht wird, ist zwischen der Nachstellmutter und dem zweiten Teilkörper eine Stellfeder angeordnet.

Bei einer ersten Bremsbetätigung nach einer Nachstellung werden nämlich die beiden Teilkörper zunächst zusammengedrückt, bis der Distanzkörper wieder an der Stützfläche anliegt. Dabei löst sich die Nachstellmutter von der Reibfläche. Dieser dabei entstehende Spalt wird wieder geschlossen, in dem die Stellfeder die Mutter auf ihrem Gewinde dreht, bis sie wieder zur Anlage an die zweite Anschlagfläche gelangt.

Die Stellfeder wird vorzugsweise als Zylinderfeder ausgeführt, die koaxial zum Schaft angeordnet ist und über einen Lagerring und einem Axiallager an der Nachstellmutter abgestützt ist. Da der Lauftrieb nicht selbsthemmend ist, bewirkt die durch die Stellfeder ausgeübte Axialkraft eine Drehung der Nachstellmutter.

Eine alternative Ausführung der Stellfeder besteht darin, dass sie koaxial zum Schaft angeordnet ist und über Stifte an ihren Enden mit dem zweiten Teilkörper und der Nachstellmutter verbunden ist. Die Torsionswirkung der Stellfeder übt unmittelbar ein Drehmoment auf die Nachstellmutter aus.

Um eine leichte und ruckfreie Drehung des Drehkörpers im Gehäuse der Spreizeinrichtung zu realisieren, sieht die Erfindung weiterhin vor, dass der Drehkörper in dem Gehäuse der Spreizeinrichtung mittels eines oder mehrerer Nadellager um seine Achse drehbar gelagert ist.

Im Folgenden soll anhand eines Ausführungsbeispieles die Erfindung näher erläutert werden. Dazu zeigen:
Fig.1 eine Draufsicht auf eine Trommelbremse mit einer erfindungsgemäßen Spreizeinrichtung,
Fig.2 einen Querschnitt durch die erfindungsgemäße Spreizeinrichtung, bei der, weil die Beläge der Bremsbacken noch neu sind, von der Distanzhülse ein minimaler Abstand zwischen den beiden Teilstücken der Spreizeinrichtung eingestellt ist,
Fig.3 einen Querschnitt durch die erfindungsgemäße Spreizeinrichtung, bei der eine Zwischenposition der Distanzhülse, die sie während eines Nachstellvorganges einnimmt, dargestellt ist,
Fig.4 einen Querschnitt durch die erfindungsgemäße Spreizeinrichtung, bei der die Lage der Distanzhülse zu den Teilstücken der Spreizeinrichtung bei weitgehend abgetragenen Bremsbelägen und ein maximaler Abstand zwischen den beiden Teilstücken der Spreizeinrichtung eingestellt ist,
Fig.5 eine alternative Federbelastung einer Nachstellmutter der Spreizeinrichtung und
Fig.6 eine alternative Lagerung einer Drehhülse in der Spreizeinrichtung.

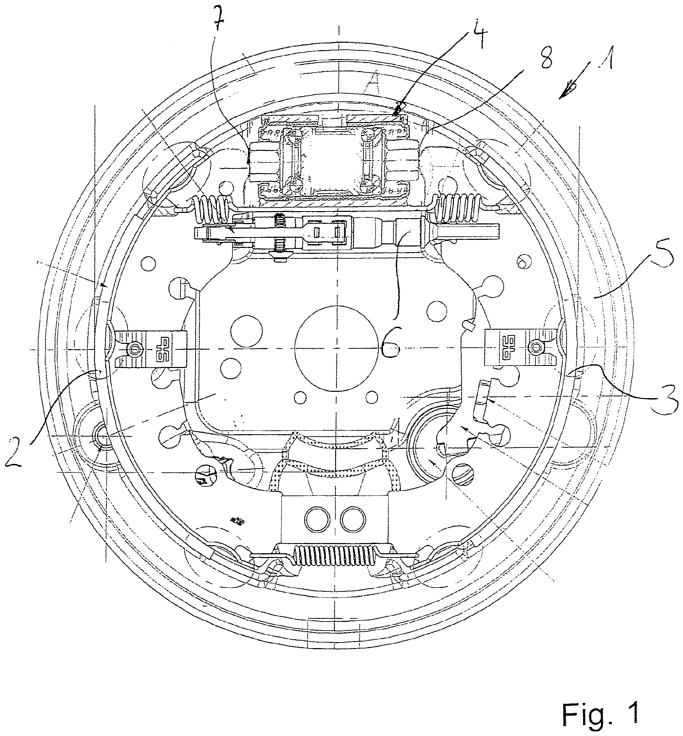

Zunächst wird auf die Fig. 1 Bezug genommen. Diese zeigt eine Trommelbremse 1 mit zwei Bremsbacken 2, 3, die an ihrem unteren Ende schwenkbar gelagert sind und zwischen deren oberen Kopfenden, die jeweils Druckflächen 7, 8 bilden, eine Spreizeinrichtung 4 angeordnet ist.

Wenn diese betätigt wird, werden die beiden Bremsbacken 2, 3 auseinander gedrückt, so dass sie sich an eine hier nicht gezeigte Bremstrommel eines Fahrzeugrades druckbeaufschlagt anlegen. Die dabei entstehenden Reibkräfte erzeugen eine Drehverzögerung des Rades und damit eine Abbremsung des Fahrzeuges.

Die Beläge der Bremsbacken 2, 3 werden dabei nach und nach abgetragen, so dass sich das Lüftspiel zwischen den Bremsbacken und der Bremstrommel nach und nach vergrößern würde. Daher ist eine Nachstelleinrichtung 6 vorgesehen, die unterhalb der Spreizeinrichtung 4 angeordnet ist und die so eingerichtet ist, dass sie, wenn das Lüftspiel nach einer Vielzahl von Bremsungen einen bestimmten Wert überschreitet, eine Rückstellung der Bremsbacken 2, 3 nur so weit erlaubt, dass sich das ursprüngliche Lüftspiel wieder einstellt. Derartige Nachstelleinrichtungen 6 sind bekannt und brauchen daher nicht näher erläutert zu werden.

Eine Nachstellung hat aber zur Folge, dass die Bremsbacken selbst nicht ihre ursprüngliche Position erreichen, so dass eine vollständig nach dem Stand der Technik zurückgestellte Spreizeinrichtung nicht mehr unmittelbar an den Druckflächen 7, 8 der Bremsbacken anliegt.

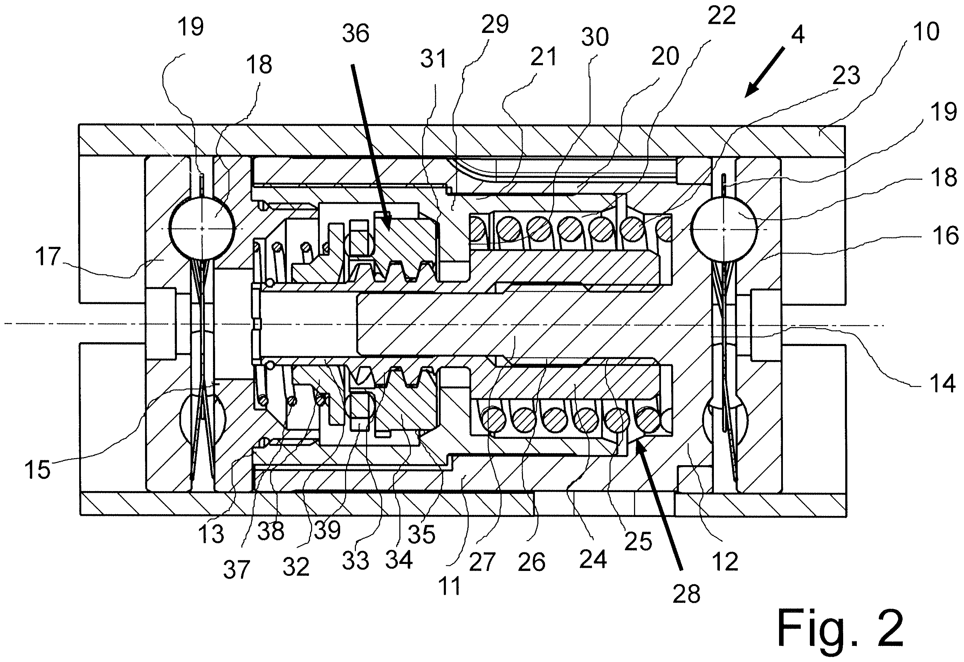

Dies muss bei der Ausgestaltung der Spreizeinrichtung 4 berücksichtigt werden. In der Fig. 2 ist dazu eine erste Ausführung der Spreizeinrichtung gezeigt. In einem hülsenförmigen Gehäuse 10 ist - um eine Drehachse drehbar gelagert - ein Drehkörper 11 angeordnet, der aus einem ersten Teilkörper 12 und einem zweiten Teilkörper 13 besteht. An der Außenseite des Drehkörpers 11 befinden sich zwei Stirnseiten 14, 15, denen jeweils ein Übertragungskörper 16, 17 gegenüberliegt. Diese ragen zu beiden Seiten mit Fortsätzen aus dem Gehäuse 10 hervor, die sich an die Druckflächen 7, 8 der Kopfenden der Bremsbacken 2, 3 anlegen.

Zwischen dem Drehkörper 11 und den beiden Übertragungskörpern 16, 17 befinden sich jeweils drei Kugeln 18, die von einem Käfig 19 auf einem Kreis koaxial zur Drehachse des Drehkörpers gehalten werden.

Sowohl auf den Stirnseiten 14, 15 der Teilkörper 12, 13 als auch auf den jeweils gegenüberliegenden Stirnseiten der Übertragungskörper 16, 17 befinden sich rampenförmige Rollbahnen, die bewirken, dass die Übertragungskörper 16, 17 vom Drehkörper entfernt werden, wenn dieser um seine Drehachse gedreht wird. Wenn dies der Fall ist, drücken die Übertragungskörper 16, 17 die Kopfenden der Bremsbacken auseinander.

Die Teilkörper 12, 13 besitzen jeweils einen hülsenförmigen Abschnitt 20, 21, die ineinander gesteckt sind, wobei die beiden Abschnitte 20, 21 über eine Nut-Feder-Verbindung; Kerbverzahnung o. ä. drehfest, aber axial verschiebbar aneinander gehalten sind.

Der innere hülsenförmige Abschnitt 21 schließt einen inneren Raum 22 ein. Dort befindet sich eine Spreizfeder 23, die die beiden Teilkörper 12, 13 auseinander drückt und damit die Übertragungskörper 16, 17 an den hier nicht gezeigten Druckflächen an den Kopfenden der Bremsbacken 2, 3 in Anlage hält.

In dem Raum 22 befindet sich weiterhin ein Distanzkörper 24 in Form einer Hülse. Der Distanzkörper 24 besitzt ein Innengewinde 25, das mit einem Außengewinde 26 auf einem an der Innenseite des ersten Teilkörpers hervorstehenden Zapfens 27 aufgeschraubt ist und einen Spindelantrieb bildet. Da das Innengewinde 25 und das Außengewinde 26 eine geringe Steigung aufweisen, handelt es sich um einen selbsthemmenden Spindelantrieb, der im Folgenden als Sperrtrieb 28 bezeichnet werden soll. Eine Drehung des Distanzkörpers 24 bewirkt, dass dieser sich auf den Zapfen 27, je nach Drehrichtung, vor- bzw. zurückschraubt. Andererseits findet wegen der Selbsthemmung des Sperrtriebs 28 bei einer axialen Druckbelastung auf den Sperrtrieb im Zuge einer Bremsbetätigung keine Drehung des Distanzkörpers 24 auf dem Zapfen 27 statt. Der zweite Teilkörper 13 besitzt eine Trennwand 29 mit einem zentralen Durchlass. Der Distanzkörper 24 ist mit einem Absatz an die eine Stützfläche 30 bildende Vorderseite der Trennwand 29, die zum ersten Teilkörper 12 weist, angelegt. Durch den Durchlass 31 weist ein Schaft 32 des Distanzkörpers 24 hindurch. Auf der Rückseite der Trennwand 29 besitzt der Schaft 32 ein Außengewinde 33, auf dem eine Nachstellmutter 34 aufgeschraubt ist.

Die Rückwand besitzt eine konusförmige Vertiefung 35, in der die Nachstellmutter 34 liegt, wobei ihre Kante an der konusförmigen Fläche der Vertiefung 35 anliegt.

Im Gegensatz zum Sperrtrieb 28 zwischen dem Distanzkörper 24 und dem Zapfen 27 weist der Spindelantrieb, bestehend aus den Gewinden der Nachstellmutter 34 und des Schaftes 32, eine hohe Steigung auf und ist daher nicht selbsthemmend. Eine axiale Belastung der Nachstellmutter führt somit zu einer Schraubbewegung von Nachstellmutter 34 und Distanzkörper 24 zueinander: Dieser Spindelantrieb soll daher im Folgenden als Lauftrieb 36 bezeichnet werden.

Des Weiteren greift an der Nachstellmutter 34 eine Stellfeder 37 an, die als Zylinderfeder ausgeführt ist und koaxial zum Schaft 32 angeordnet ist.

Die Funktionsweise der Nachstelleinrichtung wird im Folgenden anhand der Fig. 2, 3 und 4 erläutert.

Man muss sich dabei vor Augen halten, dass die Nachstellmutter 34 mit dem Distanzkörper 24 einen Lauftrieb 36 bildet, so dass bei einer axialen Belastung des Lauftriebs sich die Nachstellmutter 34 auf dem Schaft 32 bzw. der Schaft 32 in der Nachstellmutter 34 dreht, so dass sich die relative axiale Position von Schaft 32 und Nachstellmutter 34 ändert.

Im Gegensatz dazu bildet das Gewinde zwischen dem Zapfen 27 und dem Distanzkörper 24 einen Sperrtrieb 28.

Die beiden Teilkörper 12, 13 werden auf eine bestimmte Distanz gehalten, die dadurch bestimmt ist, dass der Distanzkörper 24 an der Stützfläche 30 anliegt und sich wegen der Selbsthemmung des Sperrtriebs 28 bei einer axialen Belastung, wie sie bei eine Bremsbetätigung auftritt, nicht auf dem Zapfen 27 bewegt.

Bei einem Verschleiß der Bremsbeläge über ein bestimmtes Maß hinaus sorgt eine hier nicht gezeigte Nachstellvorrichtung dafür, dass die Bremsbacken nicht in ihre Ursprungsposition zurückfallen, sondern nur so weit, dass sich das konstruktiv vorgesehene Lüftspiel zwischen dem Bremsbelag und der Bremstrommel wieder einstellt. Dies wiederum hat aber zur Folge, dass zwischen den Übertragungskörpern 16, 17 und den Bremsbacken zunächst ein Spiel verbleibt, das aber dadurch ausgeglichen wird, dass die Spreizfeder 23 die beiden Teilkörper 12, 13 auseinanderdrückt.

Dabei wird eine axiale Zugbelastung auf den Distanzkörper 24 ausgeübt, die zur Folge hat, dass dieser sich in der Nachstellmutter 34 dreht, da diese in Anlage an der Konusfläche der Vertiefung 35 liegt und die sich dort einstellenden Reibungskräfte eine Drehung der Nachstellmutter 34 verhindern. Daher wird sich der Distanzkörper 24 zwangsläufig auf dem Zapfen 27 drehen und seine axiale Lage in Bezug auf den Zapfen 27 ändern. Dies führt dazu, dass sich der Distanzkörper von der Stützfläche 30 entfernt und ein Spalt s entsteht, der etwas kleiner ist als die Summe der beiden zu überbrückenden Abstände zwischen den Übertragungskörpern 16, 17 und den Kopfenden der Bremsbacken. Jedenfalls befinden sich die Übertragungskörper 16, 17 aufgrund der Kraft der Spreizfeder 23 wieder in Anlage an den Bremsbacken.

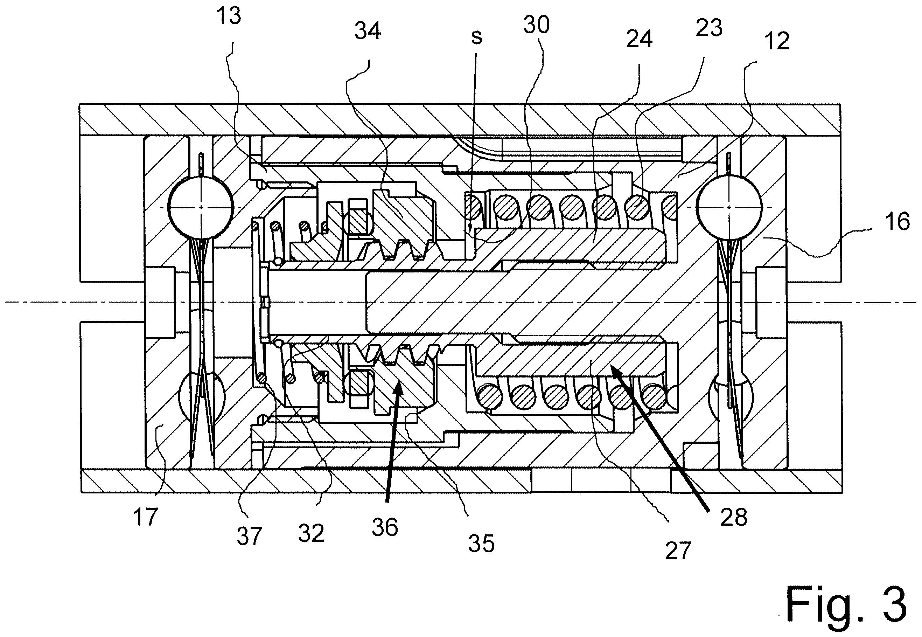

Bei einer erneuten Betätigung der Bremse hat die in der Fig. 3 gezeigte Zwischenposition zur Folge, dass zunächst die beiden Teilkörper 12, 13 gegen die Kraft der Spreizfeder 23 wieder zusammengedrückt werden, wodurch sich die Nachstellmutter 34 aus der Vertiefung 35 löst und durch die Stellfeder 37 ein Drehmoment erfährt, das die Nachstellmutter 34 wieder in die Vertiefung 35 hineindreht. Die Lage des Distanzkörpers 24 auf dem Zapfen 27 bleibt dabei wegen der Selbsthemmung des Sperrtriebs 28 unverändert.

Nach der Beendigung der Bremsung wird die Spreizfeder 23 die beiden Teilkörper 12, 13 wieder auseinanderdrücken, wobei sich - wie oben beschrieben - der Distanzkörper 24 wieder auf dem Zapfen 27 dreht, wobei der Spalt s zwischen dem Distanzkörper 24 und der Stützfläche 30 wieder etwas kleiner wird, bis er nach einigen Bremsungen vollständig geschlossen ist und die Nachstellung des Lüftspiels vollständig durch eine entsprechende Drehung des Distanzkörpers 24 auf dem Schaft 32 ausgeglichen worden ist.

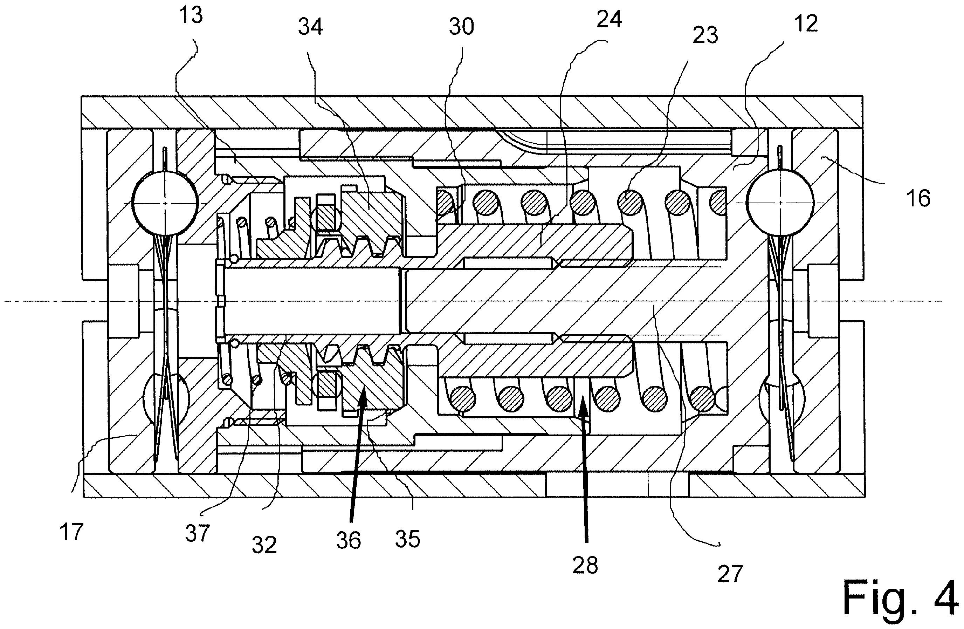

Es sind also einige Folgebremsungen notwendig, bis der Distanzkörper 24 wieder an der Stützfläche 30, wie in Fig. 4 gezeigt, anliegt und - insoweit wieder die Ausgangsposition eingestellt ist - wobei sich allerdings die Lage der Distanzhülse 24 gegenüber dem Zapfen 27 bzw. den Teilkörpern 12, 13 geändert hat und somit eine neue, die Nachstellung der Bremsbacken berücksichtigende Distanz zwischen den beiden Teilkörpern 12, 13 eingestellt hat.

Wie viele Folgebremsungen hierfür notwendig sind, richtet sich nach dem Verhältnis der Steigungen von Lauftrieb und Sperrtrieb und der Schrittweite der externen Nachstellung des Lüftspiels.

Die Stellfeder 37 kann in zwei Ausführungen genutzt werden. In den Fig. 2-4 ist eine erste Ausführung dargestellt. Die Stellfeder 37 ist als Zylinderfeder ausgeführt, die sich einerseits am Boden des zweiten Teilkörpers 13 und andererseits über einen Ring 38 und einem Lagerring 39 an der Nachstellmutter 34 abstützt. Die Axialkraft der Stellfeder 37 führt zu einer Drehung der Nachstellmutter auf dem Schaft 32, so lange sie nicht in Anlage in der Vertiefung liegt.

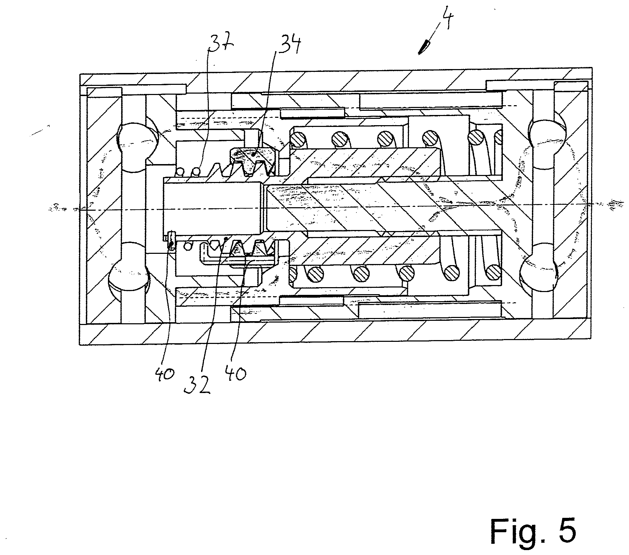

Eine alternative Ausführung der Stellfeder 37 ist in der Fig. 5 dargestellt. Hierbei ist die Stellfeder 37 als Schenkelfeder ausgeführt, die allerdings an ihren beiden Enden jeweils in einen Stift 40 übergeht, der an einem Ende mit dem zweiten Teilkörper 13 und am anderen Ende mit der Nachstellmutter 34 verbunden ist. Die Stellfeder ist tordiert, so dass sie einen Drehmoment auf die Nachstellmutter 34 ausüben kann, was ebenfalls zu einer Drehung der Nachstellmutter 34 auf dem Schaft 32 führt, wenn die Nachstellmutter nicht in Anlage an der Vertiefung liegt.

Für alle eben beschriebenen Ausführungen gilt, dass bei einer Erneuerung der Bremsbeläge der Distanzkörper 24 von außen, z.B. über eine Bohrung im Übertragungskörper 16 durch ein Werkzeug, in seine in Fig. 2 dargestellte Ausgangsposition zurückgestellt wird.

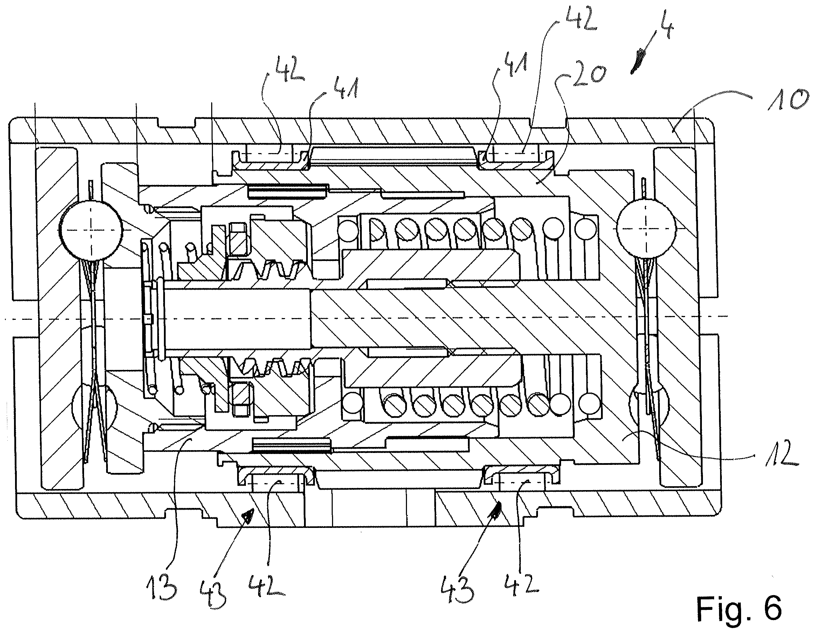

Fig. 6 zeigt eine Alternative bzw. eine verbesserte Ausführung einer Spreizeinrichtung 4 gemäß der Fig. 2 bis 4.

Fig. 6 zeigt die Spreizeinrichtung in einer Position, bei der ein maximaler Abstand zwischen den beiden Teilstücken der Spreizeinrichtung eingestellt ist. Dies entspricht der Darstellung in der Fig. 4.

In den bisher dargestellten Ausführungen ist eine Gleitlagerung des ersten Teilkörpers 12 im Gehäuse 10 der Spreizeinrichtung 4 vorgesehen.

In der verbesserten Ausführung wird die Gleitlagerung durch eine Rollenlagerung ersetzt.

Dazu befinden sich umlaufend auf dem hülsenförmigen Abschnitt 20 des ersten Teilkörpers 12 zwei im Querschnitt U-förmige Rollbahnen 41, deren Rollflächen der Mantelfläche des Gehäuses 10 äquidistant gegenüberliegt. In dem Spalt zwischen der Rollfläche und der Mantelfläche des Gehäuses befindet sich eine Vielzahl von Rollen 42, die sich einerseits an der Rollfläche und andererseits an der Mantelfläche abwälzen.

Der erste Teilkörper 12 ist somit mittels zweier Nadellager 43 im Gehäuse 10 drehbar gelagert, wodurch eine druckfreiere Einstellung ermöglicht ist.

**Bezugszeichenliste**

| | | | |
|---|---|---|---|
| 1 | Trommelbremse | 21 | hülsenförm. Abschnitt |
| 2 | Bremsbacke | 22 | Raum |
| 3 | Bremsbacke | 23 | Spreizfeder |
| 4 | Spreizeinrichtung | 24 | Distanzkörper |
| 5 | Tragplatte | 25 | Innengewinde |
| 6 | Nachstelleinrichtung | 26 | Außengewinde |
| 7 | Druckfläche | 27 | Zapfen |
| 8 | Druckfläche | 28 | Sperrtrieb |
| | | 29 | Trennwand |
| 10 | Gehäuse | 30 | Stützfläche |
| 11 | Drehkörper | 31 | Durchlass |
| 12 | erster Teilkörper | 32 | Schaft |
| 13 | zweiter Teilkörper | 33 | Außengewinde |
| 14 | Stirnseite | 34 | Nachstellmutter |
| 15 | Stirnseite | 35 | Vertiefung |
| 16 | Übertragungskörper | 36 | Lauftrieb |
| 17 | Übertragungskörper | 37 | Stellfeder |
| 18 | Kugel | 38 | Ring |
| 19 | Käfig | 39 | Axiallager |
| 20 | hülsenförm. Abschnitt | 40 | Stifte |
| | | 41 | Rollbahn |
| | | 42 | Rollen |
| | | 43 | Nadellager |

## Patentansprüche

1. Spreizeinrichtung für eine mit einer Nachstelleinrichtung versehenen Trommelbremse, wobei die Spreizeinrichtung einen um eine Drehachse drehbaren Drehkörper (11) mit einer senkrecht zur Drehachse verlaufenden Stirnseite und einen gegen eine Verdrehung um die besagte Drehachse gesicherten Übertragungskörper (16, 17) mit einer der Stirnseite gegenüberliegenden Druckseite aufweist, wobei zwischen der Stirnseite und der Druckseite auf einem koaxial zur besagten Drehachse verlaufenden Kreis wenigstens drei Kugeln (18) angeordnet sind, die in Kugelbahnen an der Stirnseite und der Druckseite verlaufen, und wobei wenigstens jeweils die Kugelbahnen einer Seite als Rampe ausgeführt sind, **dadurch gekennzeichnet, dass** der Drehkörper (11) aus einem ersten und einem zweiten Teilkörper (12, 13) besteht, die in axialer Richtung gegeneinander verschiebbar sind und die von einem lageveränderlichen Distanzkörper (24) auf Abstand gehalten sind.

2. Spreizeinrichtung nach Anspruch 1, **dadurch gekennzeichnet, dass** die Teilkörper (12, 13) von einer zwischen ihnen angeordneten Spreizfeder (23) in Richtung auf einen größeren Abstand belastet sind.

3. Spreizeinrichtung nach Anspruch 1 oder 2, **dadurch gekennzeichnet, dass** der Distanzkörper (24) ein Gewinde (25) aufweist, das in ein Gegengewinde am ersten Teilkörper (12) eingreift, wobei die Gewindeverbindung ein selbsthemmender Sperrtrieb (28) ist, und dass der Distanzkörper (24) an einer Stützfläche (30) des zweiten Teilkörpers anliegt (13), die dem ersten Teilkörper (12) gegenüber liegt.

4. Spreizeinrichtung nach Anspruch 3, **dadurch gekennzeichnet, dass** der Distanzkörper (24) eine Nachstellmutter (34) aufweist, die an einer Reibfläche des zweiten Teilkörpers (13), welche der Stützfläche (30) gegenüberliegt, anliegt, und dass eine Gewindeverbindung zwischen der Nachstellmutter und dem Distanzkörper als nicht selbsthemmender Lauftrieb (36) ausgebildet ist.

5. Spreizeinrichtung nach Anspruch 4, **dadurch gekennzeichnet, dass** der Distanzkörper (24) aus einer Hülse mit einem Innengewinde (25) besteht, das auf einem das Gegengewinde bildenden Außengewinde (26) an einen Zapfen (27) am ersten Teilkörper (12) aufgeschraubt ist.

6. Spreizeinrichtung nach Anspruch 5, **dadurch gekennzeichnet, dass** die Hülse einen sich in axialer Richtung erstreckenden Schaft (32) aufweist, der ein Außengewinde (33) für die Nachstellmutter (34) aufweist, wobei der Schaft (32) durch eine Trennwand (29) des zweiten Teilkörpers (13) hindurchragt und die Nachstellmutter (34) an der von dem ersten Teilkörper (12) wegweisenden Rückwand der Trennwand (29) anliegt.

7. Spreizeinrichtung nach Anspruch 6, **dadurch gekennzeichnet, dass** die Rückwand eine konusförmige Vertiefung (35) für die Nachstellmutter (34) aufweist.

8. Spreizeinrichtung nach einem der vorhergehenden Ansprüche, **dadurch gekennzeichnet, dass** wirkmäßig zwischen der Nachstellmutter (34) und dem zweiten Teilkörper (13) eine Stellfeder (37) angeordnet ist.

9. Spreizeinrichtung nach Anspruch 7, **dadurch gekennzeichnet, dass** die Stellfeder (37) eine Zylinderfeder ist, die koaxial zum Schaft (32) angeordnet ist und über einen Lagerring (39) an der Nachstellmutter (34) abgestützt ist.

10. Spreizeinrichtung nach Anspruch 7, **dadurch gekennzeichnet, dass** die Stellfeder (37) eine Zylinderfeder ist, die koaxial zum Schaft angeordnet ist und über Stifte (40) an ihren Enden mit dem zweiten Teilkörper (13) und der Nachstellmutter (34) verbunden ist.

11. Spreizeinrichtung nach einem der vorhergehenden Ansprüche, **dadurch gekennzeichnet, dass** der Drehkörper (11) in einem Gehäuse (10) der Spreizeinrichtung (4) mittels eines oder mehrerer Nadellager (43) um seine Achse drehbar gelagert ist.

## Claims

1. Expansion device for a drum brake provided with a readjustment device, wherein the expansion device has a rotating body (11), which is rotatable around a rotational axis, with an end face extending perpendicularly to the rotational axis, and a transmission body (16, 17), which is secured against rotation around said rotational axis, with a pressure face disposed opposite the end face, wherein at least three balls (18), which run in ball tracks on the end face and pressure face, are arranged between the end face and the pressure face in a circle which extends coaxially to said rotational axis, and wherein at least the ball tracks of one face are designed in each case as a ramp, **characterized in that in that** the rotating body (11) consists of a first and a second body part (12, 13) which are displaceable against each other in the axial direction and which are held at a distance by a positionally variable spacer body (24).

2. Expansion device according to Claim 1, **characterized in that** the body parts (12, 13) are loaded in the direction of a greater distance by an expander spring (23) which is arranged between them.

3. Expansion device according to either of Claims 1 and 2, **characterized in that** the spacer body (24) has a thread (25) which engages in a mating thread on the first body part (12), wherein the threaded connection is a self-locking locking drive (28), and **in that** the spacer body (24) butts against a support surface (30) of the second body part (13) which is disposed opposite the first body part (12).

4. Expansion device according to Claim 3, **characterized in that** the spacer body (24) has a readjustment nut (34) which butts against a friction surface of the second body part (13) which is disposed opposite the support surface (30), and **in that** a threaded connection between the readjustment nut and the spacer body is designed as a non-self-locking rotating drive (36) .

5. Expansion device according to Claim 4, **characterized in that** the spacer body (24) consists of a sleeve with a female thread (25) which on a male thread (26) forming the mating thread is screwed on a spigot (27) on the first body part (12).

6. Expansion device according to Claim 5, **characterized in that** the sleeve has an axially extending shank (32) which has a male thread (33) for the readjustment nut (34), wherein the shank (32) projects through a partition (29) of the second body part (13) and the readjustment nut (34) butts against the rear wall of the partition (29) which points away from the first body part (12).

7. Expansion device according to Claim 6, **characterized in that** the rear wall has a conical recess (35) for the readjustment nut (34).

8. Expansion device according to one of the preceding claims, **characterized in that** an adjustment spring (37) is functionally arranged between the readjustment nut (34) and the second body part (13).

9. Expansion device according to Claim 7, **characterized in that** the adjustment spring (37) is a cylindrical spring which is arranged coaxially to the shank (32) and is supported via a bearing ring (39) on the readjustment nut (34).

10. Expansion device according to Claim 7, **characterized in that** the adjustment spring (37) is a cylindrical spring which is arranged coaxially to the shank and is connected to the second body part (13) and to the readjustment nut (34) via pins (40) at its ends.

11. Expansion device according to one of the preceding claims, **characterized in that** the rotating body (11) is rotatably supported around its axis in a housing (10) of the expansion device (4) by means of one or more needle bearings (43).

## Revendications

1. Dispositif d'écartement pour un frein à tambour doté d'un dispositif de rattrapage de jeu, le dispositif d'écartement comprenant un corps rotatif (11) pouvant tourner autour d'un axe de rotation et doté d'un côté frontal s'étendant perpendiculairement à l'axe de rotation et un corps de transmission (16, 17) bloqué en rotation autour dudit axe de rotation et doté d'un côté de pression en regard du côté frontal, au moins trois billes (18) étant disposées entre le côté frontal et le côté de pression sur un cercle s'étendant de manière coaxiale audit axe de rotation, lesquelles s'étendent dans des chemins de billes sur le côté frontal et le côté de pression, et au moins respectivement les chemins de billes d'un côté étant réalisés sous forme de rampes, **caractérisé en ce que** le corps rotatif (11) est constitué d'un premier et d'un deuxième corps partiel (12, 13) qui sont déplaçables l'un par rapport à l'autre dans la direction axiale et qui sont maintenus à distance par un corps d'espacement (24) de position variable.

2. Dispositif d'écartement selon la revendication 1, **caractérisé en ce que** les corps partiels (12, 13) sont sollicités en direction d'une plus grande distance par un ressort écarteur (23) disposé entre eux.

3. Dispositif d'écartement selon la revendication 1 ou 2, **caractérisé en ce que** le corps d'espacement (24) comprend un filetage (25) qui vient en prise dans un contre-filetage sur le premier corps partiel (12), la liaison par filetage étant un entraînement de verrouillage (28) autobloquant, et **en ce que** le corps d'espacement (24) s'applique contre une surface d'appui (30) du deuxième corps partiel (13), laquelle est en regard du premier corps partiel (12) .

4. Dispositif d'écartement selon la revendication 3, **caractérisé en ce que** le corps d'espacement (24) comprend un écrou de rattrapage de jeu (34) qui s'applique contre une surface de friction du deuxième corps partiel (13), laquelle est en regard de la surface d'appui (30), et **en ce qu'**une liaison par filetage entre l'écrou de rattrapage de jeu et le corps d'espacement est réalisée sous forme d'entraînement rotatif (36) non autobloquant.

5. Dispositif d'écartement selon la revendication 4, **caractérisé en ce que** le corps d'espacement (24) est constitué d'une douille dotée d'un filetage intérieur (25) qui est vissé sur un filetage extérieur (26), formant le contre-filetage, sur un tourillon (27) sur le premier corps partiel (12).

6. Dispositif d'écartement selon la revendication 5, **caractérisé en ce que** la douille comprend une tige (32) s'étendant dans la direction axiale, laquelle tige comprend un filetage extérieur (33) pour l'écrou de rattrapage de jeu (34), la tige (32) traversant une paroi de séparation (29) du deuxième corps partiel (13) et l'écrou de rattrapage de jeu (34) s'appliquant contre la paroi arrière, opposée au premier corps partiel (12), de la paroi de séparation (29).

7. Dispositif d'écartement selon la revendication 6, **caractérisé en ce que** la paroi arrière comprend un évidement conique (35) pour l'écrou de rattrapage de jeu (34).

8. Dispositif d'écartement selon l'une quelconque des revendications précédentes, **caractérisé en ce qu'**un ressort de réglage (37) est disposé fonctionnellement entre l'écrou de rattrapage de jeu (34) et le deuxième corps partiel (13).

9. Dispositif d'écartement selon la revendication 7, **caractérisé en ce que** le ressort de réglage (37) est un ressort cylindrique qui est disposé de manière coaxiale à la tige (32) et est supporté sur l'écrou de rattrapage de jeu (34) par le biais d'une bague de palier (39).

10. Dispositif d'écartement selon la revendication 7, **caractérisé en ce que** le ressort de réglage (37) est un ressort cylindrique qui est disposé de manière coaxiale à la tige et est relié au deuxième corps partiel (13) et à l'écrou de rattrapage de jeu (34) par le biais de goupilles (40) à ses extrémités.

11. Dispositif d'écartement selon l'une quelconque des revendications précédentes, **caractérisé en ce que** le corps rotatif (11) est monté de manière à pouvoir tourner autour de son axe dans un boîtier (10) du dispositif d'écartement (4) au moyen d'un ou plusieurs paliers à aiguilles (43).
